# EUROPEAN PATENT APPLICATION

(11) **EP 4 826 792 A1**
(43) Date of publication of application: **21.10.2026**
(21) Application number: 24904319.1
(22) Date of filing: 16.12.2024
(51) Int. Cl.: H01M 4/525, C01G 53/00, H01M 4/131, H01M 10/052, H01M 4/485, H01M 4/02

(54) **CATHODE ACTIVE MATERIAL FOR LITHIUM SECONDARY BATTERY, MANUFACTURING METHOD OF SAME AND LITHIUM SECONDARY BATTERY COMPRISING SAME**

(30) Priority: 14.12.2023 KR 20230182326
(71) Applicant: POSCO Holdings Inc., Pohang-si, Gyeongsangbuk-do 37859 (KR); Research Institute of Industrial Science & Technology, Pohang-si, Gyeongsangbuk-do 37673 (KR)
(72) Inventor: SONG, Jun-Hyuk, Seoul 06516 (KR); KIM, Young Je, Incheon 21986 (KR); NAM, Sang Cheol, Seoul 02587 (KR); SONG, Jung Hoon, Gwacheon-si, Gyeonggi-do 13835 (KR); YU, Byongyong, Incheon 22003 (KR); LEE, Sanghyuk, Incheon 22405 (KR)
(74) Representative: Pfenning, Meinig & Partner mbB
(86) International application number: PCT/KR2024/020416
(87) International publication number: WO 2025/127754

(57) **Abstract**

The present invention relates to a positive electrode active material for a lithium secondary battery, which is a lithium transition metal oxide containing excess lithium, excess nickel, and a buffer metal element, wherein the lithium transition metal oxide has a molar ratio of lithium to the lithium transition metal oxide of 1.02 to 1.1 and a molar ratio of nickel to transition metal of 0.75 or more, and wherein the lithium transition metal oxide has, as a basic framework, a structure in which a lithium layer and a transition metal layer are alternately stacked, anisotropic contraction and expansion during charging and discharging are suppressed as a part of the buffer metal element in the transition metal layer is substituted into the lithium layer and a part of lithium ions in the lithium layer is substituted into the transition metal layer, and the lithium transition metal oxide has a sphericity of 0.8 or more.

## Description

### [TECHNICAL FIELD]

The present invention relates to a positive electrode active material for a lithium secondary battery, a method for preparing the same, and a lithium secondary battery comprising the same.

### [BACKGROUND ART]

As the application range of lithium secondary batteries has expanded from small electronic devices to electric vehicles, power storage devices, and the like, demand for positive electrode materials having high energy density and excellent lifespan characteristics has increased.

For high energy density, conventional ternary nickel-cobalt-manganese NCM positive electrode materials have adopted a direction of increasing capacity by increasing the content of nickel, but there is a problem in that lifespan characteristics deteriorate due to anisotropic expansion/contraction caused by an increase in nickel content.

In addition, lithium-rich layered positive electrode materials (Li₁₊ₓM-O₂), which are being studied as next-generation positive electrode materials, have attracted attention as next-generation positive electrode active material candidates because they can utilize a high lithium content in the structure and an oxygen oxidation/reduction reaction and thus have very high charge/discharge capacity. However, there are problems in that discharge capacity in actual use after an activation process is low, true density of the active material itself is low, and particle packing is not dense due to plate-like crystal growth, and therefore actual energy density is relatively low.

Accordingly, there is a need for a new positive electrode material capable of simultaneously realizing high energy density and excellent lifespan characteristics.

### [DETAILED DESCRIPTION OF THE INVENTION]

### [Technical Problem]

Accordingly, an object of the present invention is to provide a positive electrode active material for a lithium secondary battery having a new composition capable of simultaneously realizing high energy density and excellent lifespan characteristics, a method for preparing the same, and a lithium secondary battery comprising the same.

### [Technical Solution]

An embodiment of the present invention provides a positive electrode active material for a lithium secondary battery, which is a lithium transition metal oxide containing excess lithium, excess nickel, and a buffer metal element, wherein the lithium transition metal oxide has a molar ratio of lithium to the lithium transition metal oxide of 1.02 to 1.1 and a molar ratio of nickel to transition metal of 0.75 or more, and wherein the lithium transition metal oxide has, as a basic framework, a structure in which a lithium layer and a transition metal layer are alternately stacked, anisotropic contraction and expansion during charging and discharging are suppressed as a part of the buffer metal element in the transition metal layer is substituted into the lithium layer and a part of lithium ions in the lithium layer is substituted into the transition metal layer, and the lithium transition metal oxide has a sphericity of 0.8 or more.

The lithium transition metal oxide may be a secondary particle formed by aggregation of a plurality of primary particles, and an average particle diameter of the primary particles may be 0.25 µm or less.

An average particle diameter (D50) of the secondary particles may be 12 µm or less.

In addition, a part of nickel ions in the transition metal layer may be substituted into the lithium layer.

The lithium transition metal oxide may be configured such that lithium ions move through the lithium layer and the transition metal layer during charging and discharging.

The buffer metal element may be a transition metal element having no valence electrons in a d orbital.

The buffer metal element may be Ti, Nb, W, Zr, V, Cr, Mo, Ta, or a combination thereof.

A content of the buffer metal element may be 2 mol% to 25 mol% based on the total number of moles of transition metals.

A content of the buffer metal element may be 6 mol% to 15 mol% based on the total number of moles of transition metals.

The lithium transition metal oxide may have a ratio of a peak intensity of a (003) plane to a peak intensity of a (104) plane (I(003)/I(104)) of 0.7 to 1.6 in X-ray diffraction analysis.

The lithium transition metal oxide may have a difference between a maximum value and a minimum value of a c-axis lattice constant of 0.6 Å or less during charging until a termination voltage reaches 4.6 V in a first charging process.

The lithium transition metal oxide may have a rate of change in a c-axis lattice constant of 5% or less during charging until a termination voltage reaches 4.6 V in a first charging process.

The lithium transition metal oxide may have a c-axis lattice constant of 13.8 Å or more after charging until a termination voltage reaches 4.6 V in a first charging process.

The lithium transition metal oxide may not contain cobalt and manganese.

The lithium transition metal oxide may be represented by the following Chemical Formula 1.

[Chemical Formula 1] Li₁₊ₓ(NiₐM1_{b}M2_{c})₁₋ₓO₂

In Chemical Formula 1, 0.02≤x≤0.1, 0.75≤a≤0.98, 0.02≤b≤0.25, 0≤c≤0.1, a+b+c=1, M1 is a buffer metal element and is Ti, Nb, W, Zr, V, Cr, Mo, Ta, or a combination thereof, and M2 is a doping element and is Al, B, Y, Co, Mn, Fe, Cu, Zn, Ga, Ge, Ru, Rh, Sn, Sb, Re, Ir, Pt, Pb, Bi, Na, K, Rb, Cs, Ca, Sr, Ba, Mg, Si, Sc, or a combination thereof.

Another embodiment of the present invention provides a method for preparing a positive electrode active material for a lithium secondary battery, comprising: mixing a nickel-containing transition metal compound, a buffer metal raw material, and a solvent to form a mixture; spray-drying the mixture to form a precursor; and mixing the precursor and a lithium raw material and then calcining the same to form a lithium transition metal oxide, wherein, in the forming of the mixture, an input amount of the nickel-containing transition metal compound is 75 mol% or more based on the total number of moles of the nickel-containing transition metal compound and the buffer metal raw material, and, in the forming of the lithium transition metal oxide, an input amount of the lithium raw material is controlled such that a molar ratio of lithium to the total amount of transition metals contained in the precursor (Li/Me) is 1.05 to 1.25.

The nickel-containing transition metal compound may be Ni(OH)₂, NiO, Ni₂O₃, or a combination thereof.

The buffer metal raw material may be an oxide, hydroxide, carbonate, sulfate, phosphate, a combination thereof, or a combination thereof, containing a buffer metal element.

The spray-drying may be spraying and drying through a spray dryer.

The precursor may be represented by any one of the following Chemical Formulas 2 to 5.

[Chemical Formula 2] (NiₐM1_{b}M2_{c})(OH)₂

In Chemical Formula 2, 0.75≤a≤0.98, 0.02≤b≤0.25, 0≤c≤0.1, a+b+c=1, M1 is a buffer metal element and is Ti, Nb, W, Zr, V, Cr, Mo, Ta, or a combination thereof, and M2 is a doping element and is Al, B, Y, Co, Mn, Fe, Cu, Zn, Ga, Ge, Ru, Rh, Sn, Sb, Re, Ir, Pt, Pb, Bi, Na, K, Rb, Cs, Ca, Sr, Ba, Mg, Si, Sc, or a combination thereof.

[Chemical Formula 3] (NiₐM1_{b}M2_{c})CO₃

In Chemical Formula 3, 0.75≤a≤0.98, 0.02≤b≤0.25, 0≤c≤0.1, a+b+c=1, M1 is a buffer metal element and is Ti, Nb, W, Zr, V, Cr, Mo, Ta, or a combination thereof, and M2 is a doping element and is Al, B, Y, Co, Mn, Fe, Cu, Zn, Ga, Ge, Ru, Rh, Sn, Sb, Re, Ir, Pt, Pb, Bi, Na, K, Rb, Cs, Ca, Sr, Ba, Mg, Si, Sc, or a combination thereof.

[Chemical Formula 4] (NiₐM2_{C})(OH)₂·M1_{b}O_{d}

In Chemical Formula 4, 0.75≤a≤0.98, 0.02≤b≤0.25, 0≤c≤0.1, 2≤d≤3, a+b+c=1, M1 is a buffer metal element and is Ti, Nb, W, Zr, V, Cr, Mo, Ta, or a combination thereof, and M2 is a doping element and is Al, B, Y, Co, Mn, Fe, Cu, Zn, Ga, Ge, Ru, Rh, Sn, Sb, Re, Ir, Pt, Pb, Bi, Na, K, Rb, Cs, Ca, Sr, Ba, Mg, Si, Sc, or a combination thereof.

[Chemical Formula 5] (NiₐM2_{c})CO₃·M1_{b}O_{d}

In Chemical Formula 5, 0.75≤a≤0.98, 0.02≤b≤0.25, 0≤c≤0.1, 2≤d≤3, a+b+c=1, M1 is a buffer metal element and is Ti, Nb, W, Zr, V, Cr, Mo, Ta, or a combination thereof, and M2 is a doping element and is Al, B, Y, Co, Mn, Fe, Cu, Zn, Ga, Ge, Ru, Rh, Sn, Sb, Re, Ir, Pt, Pb, Bi, Na, K, Rb, Cs, Ca, Sr, Ba, Mg, Si, Sc, or a combination thereof.

The precursor may have a sphericity of 0.8 or more.

The precursor may be a secondary particle formed by aggregation of a plurality of primary particles, and an average particle diameter (D50) of the secondary particles may be 3 µm to 12 µm.

The precursor may have a SPAN value of 0.3 to 0.7.

The solvent may be water, ethanol, or a combination thereof.

The calcination may be performed at a temperature of 650°C to 900°C.

Another embodiment of the present invention provides a precursor for a positive electrode active material for a lithium secondary battery, which is represented by any one of the following Chemical Formulas 2 to 5 and has a sphericity of 0.8 or more.

[Chemical Formula 2] (NiₐM1_{b}M2_{c})(OH)₂

In Chemical Formula 2, 0.75≤a≤0.98, 0.02≤b≤0.25, 0≤c≤0.1, a+b+c=1, M1 is a buffer metal element and is Ti, Nb, W, Zr, V, Cr, Mo, Ta, or a combination thereof, and M2 is a doping element and is Al, B, Y, Co, Mn, Fe, Cu, Zn, Ga, Ge, Ru, Rh, Sn, Sb, Re, Ir, Pt, Pb, Bi, Na, K, Rb, Cs, Ca, Sr, Ba, Mg, Si, Sc, or a combination thereof.

[Chemical Formula 3] (NiₐM1_{b}M2_{c})CO₃

In Chemical Formula 3, 0.75≤a≤0.98, 0.02≤b≤0.25, 0≤c≤0.1, a+b+c=1, M1 is a buffer metal element and is Ti, Nb, W, Zr, V, Cr, Mo, Ta, or a combination thereof, and M2 is a doping element and is Al, B, Y, Co, Mn, Fe, Cu, Zn, Ga, Ge, Ru, Rh, Sn, Sb, Re, Ir, Pt, Pb, Bi, Na, K, Rb, Cs, Ca, Sr, Ba, Mg, Si, Sc, or a combination thereof.

[Chemical Formula 4] (NiₐM2_{C})(OH)₂·M1_{b}O_{d}

In Chemical Formula 4, 0.75≤a≤0.98, 0.02≤b≤0.25, 0≤c≤0.1, 2≤d≤3, a+b+c=1, M1 is a buffer metal element and is Ti, Nb, W, Zr, V, Cr, Mo, Ta, or a combination thereof, and M2 is a doping element and is Al, B, Y, Co, Mn, Fe, Cu, Zn, Ga, Ge, Ru, Rh, Sn, Sb, Re, Ir, Pt, Pb, Bi, Na, K, Rb, Cs, Ca, Sr, Ba, Mg, Si, Sc, or a combination thereof.

[Chemical Formula 5] (NiₐM2_{c})CO₃·M1_{b}O_{d}

In Chemical Formula 5, 0.75≤a≤0.98, 0.02≤b≤0.25, 0≤c≤0.1, 2≤d≤3, a+b+c=1, M1 is a buffer metal element and is Ti, Nb, W, Zr, V, Cr, Mo, Ta, or a combination thereof, and M2 is a doping element and is Al, B, Y, Co, Mn, Fe, Cu, Zn, Ga, Ge, Ru, Rh, Sn, Sb, Re, Ir, Pt, Pb, Bi, Na, K, Rb, Cs, Ca, Sr, Ba, Mg, Si, Sc, or a combination thereof.

Another embodiment of the present invention provides a positive electrode for a lithium secondary battery, comprising the above-described positive electrode active material.

Another embodiment of the present invention provides a lithium secondary battery comprising the positive electrode for a lithium secondary battery.

### [Advantageous Effects]

The positive electrode active material for a lithium secondary battery according to an embodiment of the present invention contains excess nickel and excess lithium, and thus can utilize not only a nickel-based cation oxidation/reduction reaction but also an anion (oxygen) oxidation/reduction reaction, thereby realizing capacity characteristics and high energy density.

In addition, since the positive electrode active material for a lithium secondary battery according to an embodiment of the present invention contains a buffer metal element, at least a part of lithium lattice sites in the lithium layer is substituted with the buffer metal element, whereby structural stability can be improved. Accordingly, anisotropic contraction and expansion of the active material during charging and discharging are suppressed, and excellent lifespan characteristics can be realized.

In addition, since the positive electrode active material for a lithium secondary battery according to an embodiment of the present invention is prepared through a wet spray-drying process, sphericity is improved, whereby electrode density can be improved to further maximize battery energy density, and transition metal elution can be reduced to further maximize lifespan characteristics.

### [BRIEF DESCRIPTION OF THE DRAWINGS]

FIG. 1 is a conceptual view of a positive electrode active material for a lithium secondary battery according to an embodiment of the present invention.
FIG. 2 is an SEM image of the positive electrode active material precursor prepared according to Example 1.
FIG. 3 is an SEM image of the positive electrode active material precursor prepared according to Example 2.
FIG. 4 is an SEM image of the positive electrode active material precursor prepared according to Example 3.
FIG. 5 is an SEM image of the positive electrode active material precursor prepared according to Example 4.
FIG. 6 is an SEM image of the positive electrode active material prepared according to Example 1.
FIG. 7 is an SEM image of the positive electrode active material prepared according to Example 2.
FIG. 8 is an SEM image of the positive electrode active material prepared according to Example 3.
FIG. 9 is an SEM image of the positive electrode active material prepared according to Example 4.
FIG. 10 is an SEM image of the positive electrode active material prepared according to Comparative Example 2.
FIG. 11 is an SEM image of the positive electrode active material prepared according to Comparative Example 3.
FIG. 12 is an SEM image of the positive electrode active material prepared according to Comparative Example 4.
FIG. 13 is an SEM image of the positive electrode active material prepared according to Comparative Example 7.

### [MODE FOR CARRYING OUT THE INVENTION]

Terms such as first, second, and third are used to describe various parts, components, regions, layers, and/or sections, but are not limited thereto. These terms are used only to distinguish one part, component, region, layer, or section from another part, component, region, layer, or section. Accordingly, a first part, component, region, layer, or section described below may be referred to as a second part, component, region, layer, or section without departing from the scope of the present invention.

The terminology used herein is merely for referring to particular embodiments and is not intended to limit the present invention. As used herein, singular forms also include plural forms unless the context clearly indicates otherwise. As used in the specification, the term "comprising" specifies stated features, regions, integers, steps, operations, elements, and/or components, and does not exclude the presence or addition of other features, regions, integers, steps, operations, elements, and/or components.

When a part is referred to as being "above" or "on" another part, it may be directly above or on the other part, or another part may be interposed therebetween. In contrast, when a part is referred to as being "directly above" another part, no other part is interposed therebetween.

Although not otherwise defined, all terms used herein, including technical and scientific terms, have the same meanings as commonly understood by a person having ordinary skill in the art to which the present invention pertains. Terms defined in commonly used dictionaries are further interpreted as having meanings consistent with the related technical literature and the presently disclosed content, and unless defined otherwise, are not interpreted in an idealized or overly formal sense.

In addition, unless otherwise specifically stated, % means wt%, and 1 ppm means 0.0001 wt%.

In the present specification, the term "combination(s) thereof" described in a Markush-type expression means one or more mixtures or combinations selected from the group consisting of the elements described in the Markush-type expression, and means including one or more selected from the group consisting of the elements.

Hereinafter, embodiments of the present invention will be described in detail so that a person having ordinary skill in the art to which the present invention pertains can easily practice the present invention. However, the present invention may be embodied in various different forms and is not limited to the embodiments described herein.

### 1. Positive Electrode Active Material

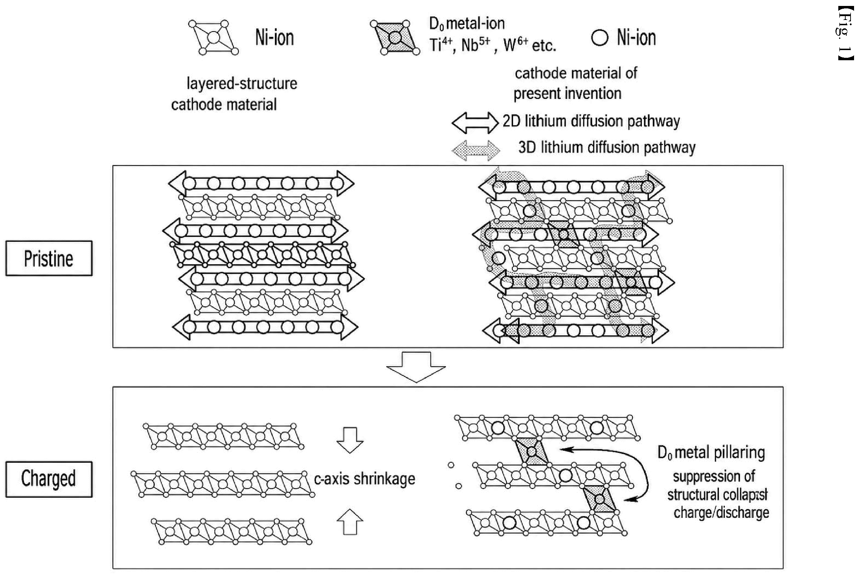

FIG. 1 is a conceptual view of a positive electrode active material for a lithium secondary battery according to an embodiment of the present invention. Hereinafter, the positive electrode active material according to the present invention will be described with reference to FIG. 1.

The positive electrode active material for a lithium secondary battery according to an embodiment of the present invention includes a lithium transition metal oxide containing excess lithium, nickel, and a buffer metal element. Accordingly, excellent capacity, high energy density, and lifespan characteristics can be simultaneously realized.

Specifically, since the lithium transition metal oxide contains excess lithium and nickel, it can utilize not only a nickel-based cation oxidation/reduction reaction but also an anion (oxygen) oxidation/reduction reaction, thereby realizing capacity characteristics and high energy density.

In addition, since the lithium transition metal oxide contains a buffer metal element, at least a part of lithium lattice sites in the lithium layer may be substituted with a part of the buffer metal element, thereby improving structural stability. Accordingly, anisotropic contraction and expansion of the active material during charging and discharging are suppressed, and excellent lifespan characteristics can be realized. In addition, the buffer metal element mainly prefers to be located in the lithium layer, and causes a disordered cation mixed structure in combination with substitution of a part of nickel ions in the transition metal layer into the lithium layer due to introduction of excess lithium. Such a disordered cation mixed structure can facilitate lithium ion movement and thus can also contribute to realization of capacity and high energy density.

More specifically, the lithium transition metal oxide according to the present invention may have, as a basic framework, a structure in which a lithium layer and a transition metal layer represented by nickel are alternately stacked. In this case, the buffer metal element introduced into the lithium transition metal oxide may prefer lithium layer sites, so that at least a part of lithium sites in the lithium layer may be substituted with the buffer metal element. In addition, introduction of excess lithium may promote substitution of nickel ions in the transition metal layer into the lithium layer. At the same time, due to introduction of excess lithium, a part of lithium ions in the lithium layer may be substituted into the transition metal layer.

That is, the lithium transition metal oxide according to the present invention may have a structure in which lithium ions, nickel ions, and buffer metal elements are disorderly mixed with one another between the lithium layer and the transition metal layer.

In a conventional layered lithium transition metal oxide having a typical composition, only lithium is present in a lithium layer and only transition metals are present in a transition metal layer, or even if some position exchange between lithium and transition metals occurs, development of positive electrode materials has generally proceeded in a direction of minimizing such mutual position exchange because it generally reduces electrochemical activity. More specifically, even in a positive electrode material having a typical composition, a nickel cation among transition metals has an ionic radius similar to that of a lithium ion, and thus the nickel cation in the transition metal layer has sometimes occupied a lithium site in the lithium layer, which has commonly been referred to as cation mixing. However, when the nickel cation occupies the lithium site in the lithium layer, movement of lithium ions is hindered, causing deterioration in electrochemical characteristics such as decreases in capacity and charge/discharge efficiency. Accordingly, the conventional art has been developed in a direction of minimizing such a cation mixing ratio.

In contrast, the lithium transition metal oxide according to the present invention may have a structure in which lithium in the lithium layer and nickel ions and buffer metal elements in the transition metal layer are disorderly mixed with each other, and at the same time, lithium is included in an excess amount as compared with a conventional typical composition. Accordingly, unlike the general case in which lithium ions move two-dimensionally through a lithium layer, lithium ions can move three-dimensionally, that is, can be inserted and desorbed, not only through the lithium layer but also through the transition metal layer during charging and discharging, thereby maximizing lithium ion movement efficiency. As a result, capacity characteristics and energy density of a battery can be improved. In other words, although position exchange between lithium and nickel generally reduces electrochemical activity, in the present invention, lithium ion movement is facilitated through disordered position exchange of a buffer metal element in addition to lithium and nickel, thereby maximizing capacity characteristics and energy density of a battery.

In order to realize such a structure in which lithium in the lithium layer and the buffer metal element in the transition metal layer are disorderly mixed with each other, introduction of excess lithium and introduction of an appropriate amount of the buffer metal element are required. In addition, the presence of such a disordered cation mixed structure can be confirmed, as described below, by obtaining a ratio of a peak intensity of a (003) plane to a peak intensity of a (104) plane (I(003)/I(104)) in X-ray diffraction analysis within the range according to the present invention.

In this case, the buffer metal element may be a transition metal element having no valence electrons in a d orbital. When the buffer metal element is a transition metal element having no valence electrons in a d orbital, the buffer metal element in the transition metal layer may be easily substituted into a lithium site in the lithium layer.

More specifically, the buffer metal element may be Ti, Nb, W, Zr, V, Cr, Mo, Ta, or a combination thereof, but is not necessarily limited thereto.

In addition, the lithium transition metal oxide according to the present invention may be a compound having a solid-solution phase in which Li₂M1O₃ having a monoclinic structure, where M1 is a buffer metal element, and LiMO₂ having a rhombohedral structure, where M is Ni and other doping elements, coexist.

Meanwhile, the lithium transition metal oxide according to the present invention may have a sphericity of 0.8 or more, and more specifically 0.85 or 0.9 or more. As the sphericity is improved as described above, electrode density is improved so that battery energy density can be further maximized, side reactions with an electrolyte solution are reduced so that initial efficiency can be improved, and lifespan characteristics can be greatly improved through reduction in transition metal elution due to reduced reactivity at high voltage. In the present specification, sphericity refers to a numerical representation of how close a particle is to a sphere, and refers to a value obtained by dividing the circumference of a corresponding circle having the same area as a projected particle shape by the actual circumference of the projected particle shape through a flow-type particle analysis apparatus. Such sphericity may be measured using an analyzer for acquiring optical images (Fluid Imaging Technologies, Flowcam 8100) and analysis software (visual spreadsheet).

In addition, the lithium transition metal oxide according to the present invention may be a secondary particle formed by aggregation of a plurality of primary particles, and an average particle diameter of the primary particles may be 0.25 µm or less, and more specifically 0.2 µm or less. Since the average particle diameter of the primary particles is sufficiently small, a lithium ion movement path is shortened, and capacity characteristics can be further maximized. In the present specification, the average particle diameter of the primary particles may be measured by SEM imaging.

In addition, the average particle diameter (D50) of the secondary particles may be 12 µm or less, and more specifically 11 µm or 10 µm or less. Since the average particle diameter of the secondary particles is sufficiently small, an electrolyte can effectively penetrate into the inside, and rate characteristics can be improved. In the present specification, the average particle diameter (D50) may be defined as a particle diameter corresponding to 50% of the cumulative volume in a particle diameter distribution curve of particles. The average particle diameter (D50) may be measured, for example, using a laser diffraction method.

In this case, the sphericity, the average particle diameter of the primary particles, and the average particle diameter (D50) of the secondary particles of the lithium transition metal oxide may be easily obtained by using a spray-drying process, as described in the preparation method below.

Hereinafter, the composition of the lithium transition metal oxide according to the present invention will be described in more detail.

The lithium transition metal oxide according to the present invention may have a molar ratio of lithium to the lithium transition metal oxide of 1.02 to 1.1, and more specifically 1.03 to 1.06. When the molar ratio of lithium is too small, utilization of an anion (oxygen) oxidation/reduction reaction is reduced, and lithium substitution in the transition metal layer hardly occurs, so that the above-mentioned disordered mixed structure cannot be realized, and the effect of improving capacity and energy density may be insignificant. When the molar ratio of lithium is too large, a problem of phase stability may occur due to excessive occurrence of an anion (oxygen) oxidation/reduction reaction, and lifespan characteristics may be deteriorated. In particular, in the lithium transition metal oxide according to the present invention, the lithium content within the above range may not be further added in a small amount in consideration of the amount of lithium volatilized during an actual calcination process, but may be controlled such that the actual content of lithium in the lithium transition metal oxide is introduced within the above range.

The lithium transition metal oxide according to the present invention may have a molar ratio of nickel to transition metal of 0.75 or more, and more specifically 0.80 or more. When the molar ratio of nickel to transition metal satisfies the above range, a nickel-based cation oxidation/reduction reaction can be sufficiently utilized, thereby improving capacity and energy density.

In addition, the content of the buffer metal element may be 2 mol% to 25 mol% based on the total number of moles of transition metals, and more specifically 6 mol% to 15 mol%. When the content of the buffer metal element is too small, the effects of improving lifespan characteristics, capacity characteristics, and energy density due to introduction of the buffer metal element may be insignificant. When the content of the buffer metal element is too large, disordered mixing between the buffer metal and lithium occurs too excessively, the layered crystal structure is degraded, and lifespan characteristics, capacity characteristics, and energy density may rather be deteriorated.

Hereinafter, X-ray diffraction analysis properties of the lithium transition metal oxide according to the present invention will be described in more detail.

The lithium transition metal oxide may have a ratio of a peak intensity of a (003) plane to a peak intensity of a (104) plane (I(003)/I(104)) of 0.7 to 1.6, and more specifically 0.9 to 1.5, in X-ray diffraction analysis. The ratio of the peak intensity of the (003) plane to the peak intensity of the (104) plane (I(003)/I(104)) may mean the degree of a mixing ratio of transition metal cations in the lithium layer, and a smaller value means a larger transition metal cation mixing ratio in the lithium layer. The lithium transition metal oxide according to the present invention may have a smaller ratio of the peak intensity of the (003) plane to the peak intensity of the (104) plane (I(003)/I(104)) than a positive electrode material having a conventional typical composition, because the buffer metal element in addition to nickel is further substituted into the lithium layer. However, when the ratio of the peak intensity of the (003) plane (I(003)/I(104)) is too small, it means that the content of the buffer metal element is excessive, and thus cation mixing occurs too excessively, and lifespan characteristics, capacity characteristics, and energy density may rather be deteriorated.

In addition, the lithium transition metal oxide may have a c-axis lattice constant before charging of 14.23 Å to 14.5 Å, and more specifically 14.3 Å to 14.42 Å. In the composition according to the present invention, the c-axis lattice constant before charging may vary depending on the amount of the buffer metal element introduced, and when the c-axis lattice constant satisfies the above range, the above-mentioned effect of improving electrochemical characteristics of a battery can be preferably realized.

In addition, the lithium transition metal oxide may have a difference between a maximum value and a minimum value of a c-axis lattice constant of 0.6 Å or less during charging until a termination voltage reaches 4.6 V in a first charging process, and more specifically 0.55 Å or 0.5 Å or less.

In addition, the lithium transition metal oxide may have a rate of change in a c-axis lattice constant of 5% or less during charging until a termination voltage reaches 4.6 V in a first charging process, and more specifically 4.5%, 4%, or 3.5% or less. In the present specification, the rate of change in the c-axis lattice constant may mean a percentage (%) of a difference between the maximum value and the minimum value relative to the maximum value of the c-axis lattice constant during charging.

In addition, the lithium transition metal oxide may have a c-axis lattice constant of 13.8 Å or more after charging until a termination voltage reaches 4.6 V in a first charging process, and more specifically 13.85 Å or 13.9 Å or more.

More specifically, an increase and decrease in the c-axis lattice constant during charging and discharging of the lithium transition metal oxide may represent the degree of anisotropic expansion and contraction. In general, as charging of the lithium transition metal oxide proceeds, the c-axis lattice constant may tend to increase and then decrease. When charging is fully performed, as a result, the c-axis lattice constant after charging may be smaller than the c-axis lattice constant before charging.

In this case, in the lithium transition metal oxide according to the present invention, the amount of change in the c-axis lattice constant during charging may be reduced by introduction of the buffer metal element. Accordingly, a change trend of the c-axis lattice constant may satisfy the above range. Accordingly, structural stability of the active material is improved, and battery lifespan characteristics can be improved.

In addition, the lithium transition metal oxide may not contain cobalt and manganese. A conventional positive electrode active material has introduced cobalt and manganese as well as nickel at appropriate content levels in order to improve capacity and lifespan characteristics. In contrast, the lithium transition metal oxide according to the present invention can realize excellent electrochemical characteristics even without cobalt and manganese due to introduction of excess lithium, excess nickel, and the buffer metal element. However, it is of course noted that the lithium transition metal oxide according to the present invention does not completely exclude the possibility of using cobalt and manganese.

The lithium transition metal oxide may be more specifically represented by the following Chemical Formula 1.

[Chemical Formula 1] Li₁₊ₓ(NiₐM1_{b}M2_{c})₁₋ₓO₂

In Chemical Formula 1, 0.02≤x≤0.1, 0.75≤a≤0.98, 0.02≤b≤0.25, 0≤c≤0.1, a+b+c=1, M1 is a buffer metal element and is Ti, Nb, W, Zr, V, Cr, Mo, Ta, or a combination thereof, and M2 is a doping element and is Al, B, Y, Co, Mn, Fe, Cu, Zn, Ga, Ge, Ru, Rh, Sn, Sb, Re, Ir, Pt, Pb, Bi, Na, K, Rb, Cs, Ca, Sr, Ba, Mg, Si, Sc, or a combination thereof.

In the lithium transition metal oxide of Chemical Formula 1, lithium may be included in an amount corresponding to 1+x, and in this case, x may be 0.02≤x≤0.1 or 0.03≤x≤0.06. When x is too small, lithium substitution in the transition metal layer hardly occurs, so that the above-mentioned disordered mixed structure cannot be realized, and the effect of improving capacity and energy density may be insignificant. When x is too large, a problem of phase stability may occur due to excessive occurrence of an anion (oxygen) oxidation/reduction reaction, and lifespan characteristics may be deteriorated.

In the lithium transition metal oxide of Chemical Formula 1, nickel may be included in an amount corresponding to a, that is, 0.75≤a≤0.98 or 0.85≤a≤0.94. When a is too small, a nickel-based cation oxidation/reduction reaction cannot be sufficiently utilized, and thus capacity and energy density may be deteriorated. When a is too large, the content of the buffer metal element is reduced accordingly, and the effects of improving lifespan characteristics, capacity characteristics, and energy density due to introduction of the buffer metal element may be insignificant.

In the lithium transition metal oxide of Chemical Formula 1, M1 may be included in an amount corresponding to b, that is, 0.02≤b≤0.25 or 0.06≤b≤0.15. In this case, M1 may be a buffer metal element and may be Ti, Nb, W, Zr, V, Cr, Mo, Ta, or a combination thereof. When b is too small, the effects of improving lifespan characteristics, capacity characteristics, and energy density due to introduction of the buffer metal element may be insignificant. When b is too large, the content of the buffer metal element becomes too large, and disordered mixing between the buffer metal and lithium occurs too excessively, and lifespan characteristics, capacity characteristics, and energy density may rather be deteriorated.

In the lithium transition metal oxide of Chemical Formula 1, M2 may be included in an amount corresponding to c, that is, 0≤c≤0.1. In this case, M2 may be a doping element and may be Al, B, Y, Co, Mn, Fe, Cu, Zn, Ga, Ge, Ru, Rh, Sn, Sb, Re, Ir, Pt, Pb, Bi, Na, K, Rb, Cs, Ca, Sr, Ba, Mg, Si, Sc, or a combination thereof. The content of the doping element may be appropriately selected and controlled to realize a doping effect within a range in which electrochemical characteristics are not deteriorated.

### 2. Method for Preparing Positive Electrode Active Material

Another embodiment of the present invention provides a method for preparing a positive electrode active material for a lithium secondary battery, comprising: mixing a nickel-containing transition metal compound, a buffer metal raw material, and a solvent to form a mixture; spray-drying the mixture to form a precursor; and mixing the precursor and a lithium raw material and then calcining the same to form a lithium transition metal oxide, wherein, in the forming of the mixture, an input amount of the nickel-containing transition metal compound is 75 mol% or more based on the total number of moles of the nickel-containing transition metal compound and the buffer metal raw material, and, in the forming of the lithium transition metal oxide, an input amount of the lithium raw material is controlled such that a molar ratio of lithium to the total amount of transition metals contained in the precursor (Li/Me) is 1.05 to 1.25.

Hereinafter, the method for preparing a positive electrode active material for a lithium secondary battery according to another embodiment of the present invention will be described step by step.

First, a nickel-containing transition metal compound, a buffer metal raw material, and a solvent are mixed to form a mixture.

In this case, the input amount of the nickel-containing transition metal compound may be 75 mol% or more, and more specifically 80 mol% or more, based on the total number of moles of the nickel-containing transition metal compound and the buffer metal raw material. Accordingly, the content of nickel in the lithium transition metal oxide, which is the final product, may be 75 mol% or more or 80 mol% or more based on the total number of moles of transition metals. The technical significance of controlling the nickel content in the transition metals is the same as described above, and thus a description thereof will be omitted.

In addition, the input amount of the buffer metal raw material may be 2 mol% to 25 mol%, and more specifically 6 mol% to 15 mol%, based on the total number of moles of the transition metal precursor and the buffer metal raw material. The technical significance of controlling the content of the buffer metal raw material is the same as the above-mentioned control of the content of the buffer metal element, and thus a description thereof will be omitted.

Meanwhile, the nickel-containing transition metal compound may be Ni(OH)₂, NiO, Ni₂O₃, or a combination thereof, but is not necessarily limited thereto.

In addition, the buffer metal raw material may be an oxide, hydroxide, carbonate, sulfate, phosphate, or a combination thereof, containing a buffer metal element according to the present invention. In this case, the buffer metal element may be Ti, Nb, W, Zr, V, Cr, Mo, or Ta. For example, the buffer metal raw material may be TiO₂, Ti(OH)₂, Ti(CO₃)₂, Ti₂(CO₃)₃, Ti[OCH(CH₃)₂]₄, or the like, but is not necessarily limited thereto.

In addition, the solvent may be water, ethanol, or a combination thereof, but is not necessarily limited thereto.

In addition, the mixing may be performed through a ball-milling process, but is not necessarily limited thereto.

In addition, the mixing may be performed for 24 hours or more. When the mixing time is too short, there may be a problem in that the raw materials are not uniformly mixed, and thus the oxygen oxidation/reduction reaction may not be properly performed.

Next, the mixture is spray-dried to form a precursor.

Through the spray-drying, sphericity of lithium transition metal oxide particles may be improved. As the sphericity is improved as described above, electrode density is improved so that battery energy density can be further maximized, side reactions with an electrolyte solution are reduced so that initial efficiency can be improved, and lifespan characteristics can be greatly improved through reduction in transition metal elution due to reduced reactivity at high voltage.

In this case, the spray-drying may be spraying and drying through a spray dryer.

The precursor thus formed may be represented by any one of the following Chemical Formulas 2 to 5.

[Chemical Formula 2] (NiₐM1_{b}M2_{c})(OH)₂

In Chemical Formula 2, 0.75≤a≤0.98, 0.02≤b≤0.25, 0≤c≤0.1, a+b+c=1, M1 is a buffer metal element and is Ti, Nb, W, Zr, V, Cr, Mo, Ta, or a combination thereof, and M2 is a doping element and is Al, B, Y, Co, Mn, Fe, Cu, Zn, Ga, Ge, Ru, Rh, Sn, Sb, Re, Ir, Pt, Pb, Bi, Na, K, Rb, Cs, Ca, Sr, Ba, Mg, Si, Sc, or a combination thereof.

[Chemical Formula 3] (NiₐM1_{b}M2_{c})CO₃

In Chemical Formula 3, 0.75≤a≤0.98, 0.02≤b≤0.25, 0≤c≤0.1, a+b+c=1, M1 is a buffer metal element and is Ti, Nb, W, Zr, V, Cr, Mo, Ta, or a combination thereof, and M2 is a doping element and is Al, B, Y, Co, Mn, Fe, Cu, Zn, Ga, Ge, Ru, Rh, Sn, Sb, Re, Ir, Pt, Pb, Bi, Na, K, Rb, Cs, Ca, Sr, Ba, Mg, Si, Sc, or a combination thereof.

[Chemical Formula 4] (NiₐM2_{C})(OH)₂·M1_{b}O_{d}

In Chemical Formula 4, 0.75≤a≤0.98, 0.02≤b≤0.25, 0≤c≤0.1, 2≤d≤3, a+b+c=1, M1 is a buffer metal element and is Ti, Nb, W, Zr, V, Cr, Mo, Ta, or a combination thereof, and M2 is a doping element and is Al, B, Y, Co, Mn, Fe, Cu, Zn, Ga, Ge, Ru, Rh, Sn, Sb, Re, Ir, Pt, Pb, Bi, Na, K, Rb, Cs, Ca, Sr, Ba, Mg, Si, Sc, or a combination thereof.

[Chemical Formula 5] (NiₐM2_{c})CO₃·M1_{b}O_{d}

In Chemical Formula 5, 0.75≤a≤0.98, 0.02≤b≤0.25, 0≤c≤0.1, 2≤d≤3, a+b+c=1, M1 is a buffer metal element and is Ti, Nb, W, Zr, V, Cr, Mo, Ta, or a combination thereof, and M2 is a doping element and is Al, B, Y, Co, Mn, Fe, Cu, Zn, Ga, Ge, Ru, Rh, Sn, Sb, Re, Ir, Pt, Pb, Bi, Na, K, Rb, Cs, Ca, Sr, Ba, Mg, Si, Sc, or a combination thereof.

In addition, the precursor may be a secondary particle formed by aggregation of a plurality of primary particles.

In this case, the precursor may have a sphericity of 0.8 or more. As the sphericity of the precursor is improved, the sphericity of the lithium transition metal oxide, which is the final product, can be appropriately obtained within the range according to the present invention.

In addition, the average particle diameter (D50) of the precursor secondary particles may be 3 µm to 12 µm. When the average particle diameter of the precursor secondary particles satisfies the above range, there may be an advantage in that appropriate capacity expression and rate characteristics can be secured.

The precursor may have a SPAN value of 0.3 to 0.7. When the SPAN value of the precursor satisfies the above range, there may be an advantage in that appropriate capacity expression and rate characteristics can be secured. In the present specification, the SPAN value means a value obtained by calculating [particle diameter (D90) - particle diameter (D10)]/particle diameter (D50), and the particle diameter (D90), particle diameter (D50), and particle diameter (D10) may be defined as particle diameters corresponding to 90%, 50%, and 10% of the cumulative volume in a particle diameter distribution curve of particles, respectively. Each of the particle diameters may be measured, for example, using a laser diffraction method.

Next, the precursor and the lithium raw material may be mixed and then calcined to form a lithium transition metal oxide.

In this case, the input amount of the lithium raw material may be controlled such that the molar ratio of lithium to the total amount of transition metals contained in the precursor (Li/Me) is 1.05 to 1.25. Accordingly, a lithium transition metal oxide having a lithium-rich composition according to the present invention may be formed.

As the lithium raw material, a lithium-containing sulfate, nitrate, acetate, carbonate, oxalate, citrate, halide, hydroxide, oxyhydroxide, or the like may be used, and the lithium raw material is not particularly limited as long as it can be dissolved in water. Specifically, the lithium raw material may be Li₂CO₃, LiNO₃, LiNO₂, LiOH, LiOH·H₂O, LiH, LiF, LiCl, LiBr, LiI, CH₃COOLi, Li₂O, Li₂SO₄, CH₃COOLi, Li₃C₆H₅O₇, or a combination thereof, but is not limited thereto.

The calcination may be performed at a temperature of 650°C to 900°C. When the calcination temperature is too low, a lithium transition metal oxide having a layered structure may not be well formed. When the calcination temperature is too high, electrochemical characteristics may be deteriorated due to over-calcination.

In addition, the calcination may be performed for 3 hours to 15 hours. When the calcination time is too short, a lithium transition metal oxide having a layered structure may not be well formed. When the calcination time is too long, electrochemical characteristics may be deteriorated due to over-calcination.

In addition, the atmosphere during the calcination is not particularly limited, and the calcination may be performed, for example, under an air or oxygen (O₂) atmosphere.

### 3. Positive Electrode and Lithium Secondary Battery

Another embodiment of the present invention provides a positive electrode for a lithium secondary battery, comprising the above-described positive electrode active material.

More specifically, the positive electrode may include a positive electrode current collector and a positive electrode active material layer disposed on the positive electrode current collector and including the above-described positive electrode active material.

The positive electrode current collector is not particularly limited as long as it has conductivity without causing a chemical change in a battery, and for example, stainless steel, aluminum, nickel, titanium, calcined carbon, or aluminum or stainless steel surface-treated with carbon, nickel, titanium, silver, or the like may be used. In addition, the positive electrode current collector may typically have a thickness of 3 µm to 500 µm, and fine irregularities may be formed on a surface of the positive electrode current collector to increase adhesion of the positive electrode active material. For example, the positive electrode current collector may be used in various forms such as a film, sheet, foil, net, porous body, foam, nonwoven fabric, and the like.

The positive electrode active material layer may include a binder and/or a conductive material together with the above-described positive electrode active material.

In this case, the binder serves to improve adhesion between positive electrode active material particles and adhesion between the positive electrode active material and the positive electrode current collector. Specific examples thereof include polyvinylidene fluoride (PVDF), vinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, ethylenepropylene-diene monomer rubber (EPDM rubber), sulfonated EPDM, styrene-butadiene rubber (SBR), fluororubber, or various copolymers thereof, and one of these may be used alone or a mixture of two or more thereof may be used, but the binder is not limited thereto. The binder may be included in an amount of 1 wt% to 30 wt% based on the total weight of the positive electrode active material layer.

In addition, the conductive material is used to impart conductivity to an electrode, and may be used without particular limitation as long as it has electronic conductivity without causing a chemical change in the battery to be configured. Specific examples thereof include graphite such as natural graphite or artificial graphite; carbon-based materials such as carbon black, acetylene black, Ketjen black, channel black, furnace black, lamp black, thermal black, and carbon fibers; metal powders or metal fibers such as copper, nickel, aluminum, and silver; conductive whiskers such as zinc oxide and potassium titanate; conductive metal oxides such as titanium oxide; or conductive polymers such as polyphenylene derivatives, and one of these may be used alone or a mixture of two or more thereof may be used, but the conductive material is not limited thereto. The conductive material may typically be included in an amount of 1 wt% to 30 wt% based on the total weight of the positive electrode active material layer.

The positive electrode may be prepared according to a conventional method for preparing a positive electrode, except that the above-described positive electrode active material is used.

Specifically, the positive electrode may be prepared by applying a composition for forming a positive electrode active material layer, which includes the above-described positive electrode active material and optionally a binder, a conductive material, or a solvent as needed, onto the positive electrode current collector, followed by drying and rolling. In this case, the types and contents of the positive electrode active material, binder, and conductive material are as described above.

The solvent may be a solvent generally used in the art, and examples thereof include dimethyl sulfoxide (DMSO), isopropyl alcohol, N-methylpyrrolidone (NMP), acetone, water, and the like, and one of these may be used alone or a mixture of two or more thereof may be used. The amount of the solvent used may be sufficient to dissolve or disperse the positive electrode active material, conductive material, and binder in consideration of the coating thickness of the slurry and manufacturing yield, and to have a viscosity capable of exhibiting excellent thickness uniformity during subsequent coating for preparing the positive electrode.

Alternatively, the positive electrode may be prepared by casting the composition for forming the positive electrode active material layer on a separate support, and then laminating a film obtained by peeling the composition from the support onto the positive electrode current collector.

Another embodiment of the present invention provides a lithium secondary battery comprising the above-described positive electrode for a lithium secondary battery.

More specifically, the lithium secondary battery may include a positive electrode, a negative electrode, a separator, and an electrolyte.

The lithium secondary battery may optionally further include a battery case accommodating an electrode assembly of the positive electrode, the negative electrode, and the separator, and a sealing member for sealing the battery case.

The negative electrode may include a negative electrode current collector and a negative electrode active material layer positioned on the negative electrode current collector.

The negative electrode current collector is not particularly limited as long as it has high conductivity without causing a chemical change in a battery, and for example, copper, stainless steel, aluminum, nickel, titanium, calcined carbon, copper or stainless steel surface-treated with carbon, nickel, titanium, silver, or the like, an aluminum-cadmium alloy, or the like may be used. In addition, the negative electrode current collector may typically have a thickness of 3 µm to 500 µm, and fine irregularities may be formed on a surface of the current collector, similarly to the positive electrode current collector, to enhance binding force of the negative electrode active material. For example, the negative electrode current collector may be used in various forms such as a film, sheet, foil, net, porous body, foam, nonwoven fabric, and the like.

The negative electrode active material layer may optionally include a binder and a conductive material together with a negative electrode active material. The negative electrode active material layer may be prepared, for example, by applying and drying a composition for forming a negative electrode active material layer, which includes a negative electrode active material and optionally a binder and a conductive material, on the negative electrode current collector, or by casting the composition for forming the negative electrode on a separate support, and then laminating a film obtained by peeling the composition from the support onto the negative electrode current collector.

As the negative electrode active material, a compound capable of reversible intercalation and deintercalation of lithium may be used. Specific examples thereof include carbonaceous materials such as artificial graphite, natural graphite, graphitized carbon fibers, and amorphous carbon; metallic compounds alloyable with lithium, such as Si, Al, Sn, Pb, Zn, Bi, In, Mg, Ga, Cd, Si alloys, Sn alloys, or Al alloys; metal oxides capable of doping and dedoping lithium, such as SiOβ (0<β<2), SnO₂, vanadium oxide, and lithium vanadium oxide; or composites including the metallic compound and a carbonaceous material, such as Si-C composites or Sn-C composites, and any one thereof or a mixture of two or more thereof may be used. In addition, a metallic lithium thin film may also be used as the negative electrode active material. In addition, as the carbon material, both low-crystalline carbon and high-crystalline carbon may be used. Representative examples of low-crystalline carbon include soft carbon and hard carbon, and representative examples of high-crystalline carbon include high-temperature calcined carbon such as amorphous, plate-like, flake-like, spherical, or fibrous natural graphite or artificial graphite, Kish graphite, pyrolytic carbon, mesophase pitch-based carbon fiber, meso-carbon microbeads, mesophase pitches, and petroleum or coal tar pitch-derived cokes.

The binder and the conductive material may be the same as those described above for the positive electrode.

The separator separates the negative electrode and the positive electrode and provides a movement path for lithium ions, and may be used without particular limitation as long as it is generally used as a separator in lithium secondary batteries. In particular, a separator having low resistance to ion movement of an electrolyte and excellent electrolyte solution impregnation ability is preferable. Specifically, a porous polymer film, for example, a porous polymer film made of a polyolefin-based polymer such as an ethylene homopolymer, a propylene homopolymer, an ethylene/butene copolymer, an ethylene/hexene copolymer, or an ethylene/methacrylate copolymer, or a laminated structure of two or more layers thereof may be used. In addition, a conventional porous nonwoven fabric, for example, a nonwoven fabric made of high-melting-point glass fibers, polyethylene terephthalate fibers, or the like, may also be used. In addition, a coated separator including a ceramic component or a polymer material may be used to secure heat resistance or mechanical strength, and may optionally be used as a single-layer or multilayer structure.

The electrolyte may include organic liquid electrolytes, inorganic liquid electrolytes, solid polymer electrolytes, gel-type polymer electrolytes, solid inorganic electrolytes, molten inorganic electrolytes, and the like that may be used in preparing a lithium secondary battery, but is not limited thereto.

Specifically, the organic liquid electrolyte may include an organic solvent and a lithium salt.

The organic solvent may be used without particular limitation as long as it can serve as a medium through which ions involved in an electrochemical reaction of the battery can move. Specifically, the organic solvent may include ester-based solvents such as methyl acetate, ethyl acetate, γ-butyrolactone, and ε-caprolactone; ether-based solvents such as dibutyl ether or tetrahydrofuran; ketone-based solvents such as cyclohexanone; aromatic hydrocarbon-based solvents such as benzene and fluorobenzene; carbonate-based solvents such as dimethyl carbonate (DMC), diethyl carbonate (DEC), methylethyl carbonate (MEC), ethylmethyl carbonate (EMC), ethylene carbonate (EC), and propylene carbonate (PC); alcohol-based solvents such as ethyl alcohol and isopropyl alcohol; nitriles such as R-CN, wherein R is a C2 to C20 linear, branched, or cyclic hydrocarbon group and may include a double-bonded aromatic ring or an ether bond; amides such as dimethylformamide; dioxolanes such as 1,3-dioxolane; or sulfolanes. Among these, carbonate-based solvents are preferable, and a mixture of a cyclic carbonate having high ionic conductivity and a high dielectric constant, which may increase charge and discharge performance of a battery, for example, ethylene carbonate or propylene carbonate, and a linear carbonate-based compound having low viscosity, for example, ethylmethyl carbonate, dimethyl carbonate, or diethyl carbonate, is more preferable. In this case, when the cyclic carbonate and the chain carbonate are mixed at a volume ratio of about 1:1 to about 1:9, performance of the electrolyte solution may be excellent.

The lithium salt may be used without particular limitation as long as it is a compound capable of providing lithium ions used in a lithium secondary battery. Specifically, as the lithium salt, LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, LiB(C₂O₄)₂, or the like may be used. The concentration of the lithium salt is preferably used within a range of 0.1 M to 2.0 M. When the concentration of the lithium salt is included in the above range, the electrolyte has appropriate conductivity and viscosity, and thus may exhibit excellent electrolyte performance, and lithium ions may effectively move.

In addition to the electrolyte components, the electrolyte may further include one or more additives for the purpose of improving lifespan characteristics of a battery, suppressing a decrease in battery capacity, improving discharge capacity of a battery, and the like, such as a haloalkylene carbonate-based compound such as difluoroethylene carbonate, pyridine, triethyl phosphite, triethanolamine, cyclic ether, ethylenediamine, n-glyme, hexamethylphosphoric triamide, nitrobenzene derivatives, sulfur, quinone imine dyes, N-substituted oxazolidinone, N,N-substituted imidazolidine, ethylene glycol dialkyl ether, ammonium salts, pyrrole, 2-methoxyethanol, or aluminum trichloride. In this case, the additive may be included in an amount of 0.1 wt% to 5 wt% based on the total weight of the electrolyte.

Since the lithium secondary battery including the positive electrode active material according to the present invention as described above stably exhibits excellent discharge capacity, output characteristics, and capacity retention, it is useful for portable devices such as mobile phones, notebook computers, and digital cameras, and electric vehicle fields such as hybrid electric vehicles (HEVs).

Accordingly, another embodiment of the present invention provides a battery module including the lithium secondary battery as a unit cell, and a battery pack including the same.

The battery module or battery pack may be used as a power source for one or more medium-to-large devices selected from power tools; electric vehicles including electric vehicles (EVs), hybrid electric vehicles, and plug-in hybrid electric vehicles (PHEVs); or power storage systems.

Hereinafter, embodiments of the present invention will be described in more detail through Examples. However, the following Examples are merely preferred embodiments of the present invention, and the present invention is not limited to the following Examples.

### Example 1

### (1) Preparation of Positive Electrode Active Material

(Mixing) Ni(OH)₂ powder, TiO₂ powder, and water as a solvent were mixed through a ball-milling process for 120 hours to form a mixture. In this case, the molar ratio of the Ni(OH)₂ powder to the TiO₂ powder was 95:5.

(Spray-Drying) Thereafter, 1 wt% of citric acid was additionally mixed with the mixture, and then the mixture was sprayed through a spray dryer to prepare a precursor having an average particle diameter (D50) of 12 µm, a SPAN value of 0.7, and a sphericity of 0.9.

(Calcination) Thereafter, the precursor and LiOH·H₂O powder were mixed such that the molar ratio of lithium to the transition metals contained in the precursor (Li/Me) was 1.05+0.02, wherein +0.02 was an additionally introduced amount in consideration of the amount of lithium volatilized during calcination, and the same applies to Examples 2 to 4 and Comparative Examples 1 to 7 below. Then, the mixture was calcined at a temperature of 700°C for 10 hours under an O₂ atmosphere to form a lithium transition metal oxide having a composition of Li₁.₀₂₄Ni₀.₉₂₇Ti₀.₀₄₉O₂.

### (2) Preparation of Lithium Secondary Battery

A slurry for preparing an electrode plate was prepared by mixing the prepared positive electrode active material:conductive material (carbon black, Denka Black):binder (PVDF, KF1100) at 92.5:3.5:4 wt%, and NMP (N-methyl-2-pyrrolidone) was added to adjust the viscosity such that the solid content was about 30%. The prepared slurry was coated on a 15 µm-thick Al foil using a doctor blade, followed by drying and rolling. At this time, the electrode loading amount was 14.6 mg/cm², and the rolling density (25°C, 20 kN) was 3.1 g/cm³.

As an electrolyte solution, 1 M LiPF₆ in EC:EMC=3:7 (vol%) with 1.0 vol% of VC and 0.5 wt% of LiBF₄ added based on the total amount of the electrolyte solution was used, and a coin cell was prepared using a PP separator and a lithium negative electrode (200 µm, Honjo Metal).

### Example 2

A positive electrode active material and a lithium secondary battery were prepared in the same manner as in Example 1, except that, in the mixing step, the molar ratio of the Ni(OH)₂ powder to the TiO₂ powder was 93:7, and, in the calcination step, the molar ratio of lithium to the transition metals contained in the precursor (Li/Me) was 1.07+0.02. In this case, the average particle diameter (D50) of the precursor was 12 µm, the SPAN value was 0.7, and the sphericity was 0.9.

### Example 3

A positive electrode active material and a lithium secondary battery were prepared in the same manner as in Example 1, except that, in the mixing step, the molar ratio of the Ni(OH)₂ powder to the TiO₂ powder was 90:10, and, in the calcination step, the molar ratio of lithium to the transition metals contained in the precursor (Li/Me) was 1.10+0.02. In this case, the average particle diameter (D50) of the precursor was 12 µm, the SPAN value was 0.7, and the sphericity was 0.9.

### Example 4

A positive electrode active material and a lithium secondary battery were prepared in the same manner as in Example 1, except that, in the mixing step, the molar ratio of the Ni(OH)₂ powder to the TiO₂ powder was 80:20, and, in the calcination step, the molar ratio of lithium to the transition metals contained in the precursor (Li/Me) was 1.20+0.02. In this case, the average particle diameter (D50) of the precursor was 12 µm, the SPAN value was 0.7, and the sphericity was 0.9.

### Comparative Example 1

### (1) Preparation of Positive Electrode Active Material

(Mixing) Ni(OH)₂ powder, TiO₂ powder, and LiOH·H₂O powder were mixed through a ball mill to form a mixture such that the molar ratio of lithium to the total amount of transition metals contained in the Ni(OH)₂ powder and TiO₂ powder (Li/Me) was 1.05+0.02. In this case, the molar ratio of the Ni(OH)₂ powder to the TiO₂ powder was 95:5.

(Calcination) Thereafter, the mixture was calcined at a temperature of 700°C for 10 hours under an O₂ atmosphere to form a lithium transition metal oxide having a composition of Li₁.₀₂₄Ni₀.₉₂₇Ti₀.₀₄₉O₂.

### (2) Preparation of Lithium Secondary Battery

A lithium secondary battery was prepared in the same manner as in Example 1, except that the prepared positive electrode active material was used.

### Comparative Example 2

A positive electrode active material and a lithium secondary battery were prepared in the same manner as in Comparative Example 1, except that, in the mixing step, the molar ratio of lithium to the total amount of transition metals (Li/Me) was 1.07+0.02, and the molar ratio of the Ni(OH)₂ powder to the TiO₂ powder was 93:7.

### Comparative Example 3

A positive electrode active material and a lithium secondary battery were prepared in the same manner as in Comparative Example 1, except that, in the mixing step, the molar ratio of lithium to the total amount of transition metals (Li/Me) was 1.10+0.02, and the molar ratio of the Ni(OH)₂ powder to the TiO₂ powder was 90:10.

### Comparative Example 4

A positive electrode active material and a lithium secondary battery were prepared in the same manner as in Comparative Example 1, except that, in the mixing step, the molar ratio of lithium to the total amount of transition metals (Li/Me) was 1.20+0.02, and the molar ratio of the Ni(OH)₂ powder to the TiO₂ powder was 80:20.

### Comparative Example 5

A positive electrode active material and a lithium secondary battery were prepared in the same manner as in Comparative Example 1, except that, in the mixing step, the molar ratio of lithium to the total amount of transition metals (Li/Me) was 1.30+0.02, and the molar ratio of the Ni(OH)₂ powder to the TiO₂ powder was 70:30.

### Comparative Example 6

A positive electrode active material and a lithium secondary battery were prepared in the same manner as in Comparative Example 1, except that, in the mixing step, the molar ratio of lithium to the total amount of transition metals (Li/Me) was 1.40+0.02, and the molar ratio of the Ni(OH)₂ powder to the TiO₂ powder was 60:40.

### Comparative Example 7

A positive electrode active material and a lithium secondary battery were prepared in the same manner as in Comparative Example 1, except that, in the mixing step, the molar ratio of lithium to the total amount of transition metals (Li/Me) was 1.00+0.02, and the molar ratio of the Ni(OH)₂ powder to the TiO₂ powder was 100:0.

### Comparative Example 8

A lithium transition metal oxide positive electrode active material having a composition of Li(Ni₀.₆Co₀.₂Mn₀.₂)O₂ was prepared by a conventional method, and a lithium secondary battery was prepared in the same manner as in Example 1.

### Comparative Example 9

A lithium transition metal oxide positive electrode active material having a composition of Li(Ni₀.₈Co₀.₁Mn₀.₁)O₂ was prepared by a conventional method, and a lithium secondary battery was prepared in the same manner as in Example 1.

### Comparative Example 10

A lithium transition metal oxide positive electrode active material having a composition of Li(Ni₀.₉Co₀.₀₅Mn₀.₀₅)O₂ was prepared by a conventional method, and a lithium secondary battery was prepared in the same manner as in Example 1.

### Comparative Example 11

A lithium transition metal oxide positive electrode active material having a composition of Li₁.₁₃(Ni₀.₃Mn₀.₅₇)O₂ was prepared by a conventional method, and a lithium secondary battery was prepared in the same manner as in Example 1.

### Comparative Example 12

NiSO₄ as a nickel precursor and TiSO₄ as a titanium precursor were added to water at a molar ratio of 94:06 to prepare an aqueous solution of a nickel-titanium hydroxide precursor. While stirring the aqueous solution, a sodium hydroxide aqueous solution was slowly added dropwise and stirred to neutralize the precursor aqueous solution, thereby precipitating Ni₀.₉₄Ti₀.₀₆(OH)₂, which is a nickel-titanium hydroxide. LiOH was mixed with the precursor thus obtained so as to have a molar ratio of 1.02, and calcination was performed at 755°C for 30 hours under an oxygen atmosphere.

### Experimental Example 1: SEM Images of Positive Electrode Active Material Precursors and Active Materials

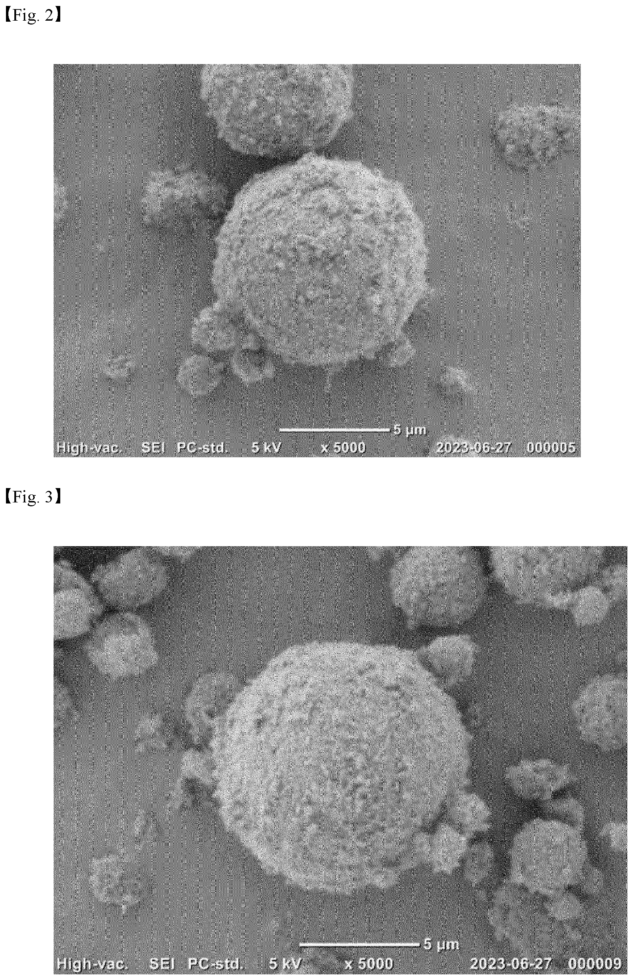

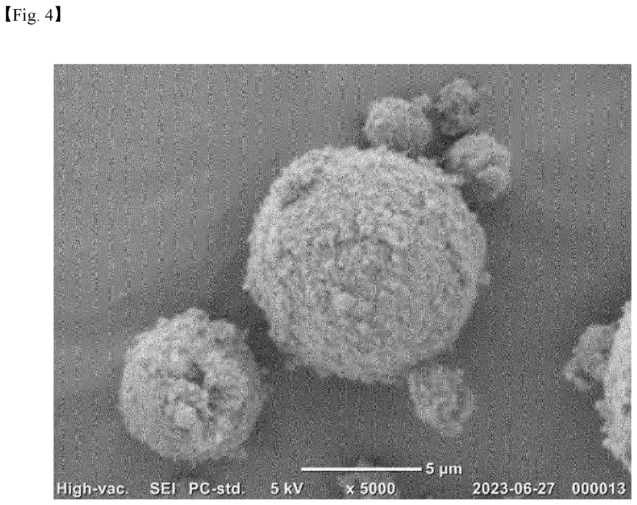

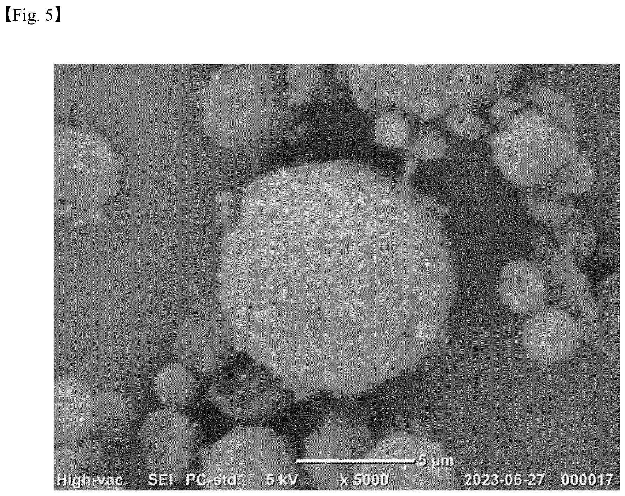

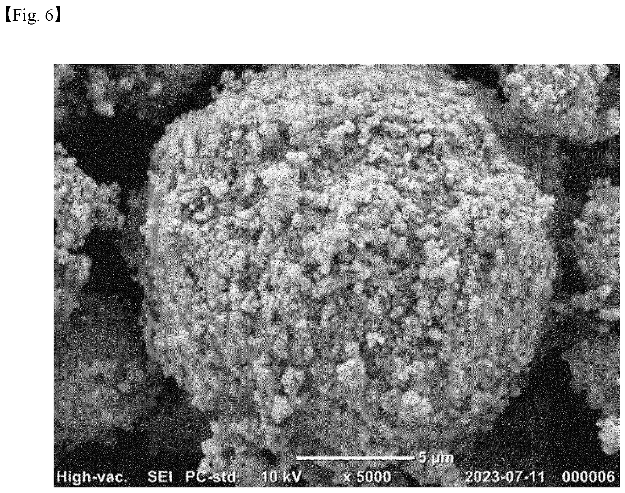

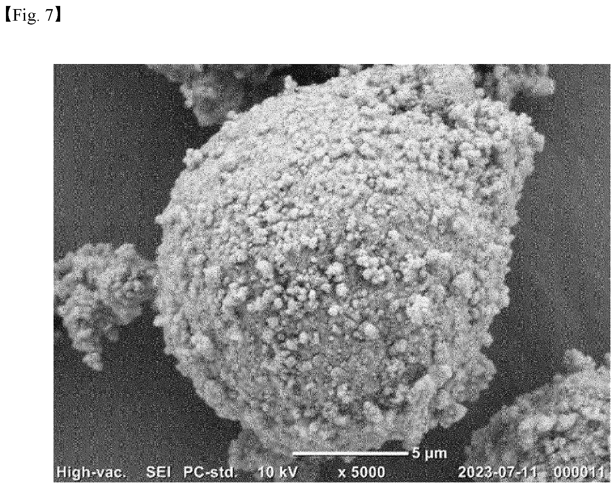

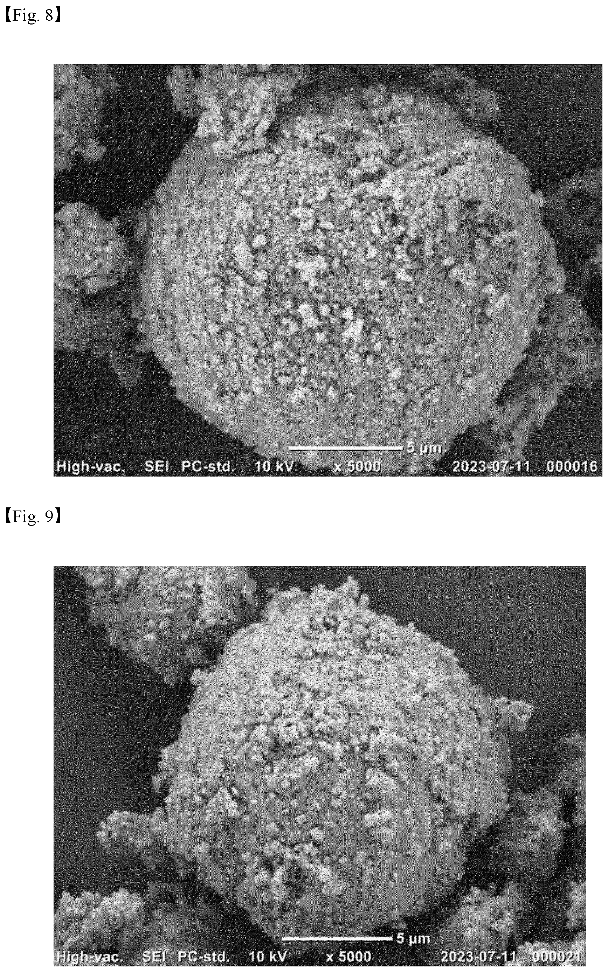

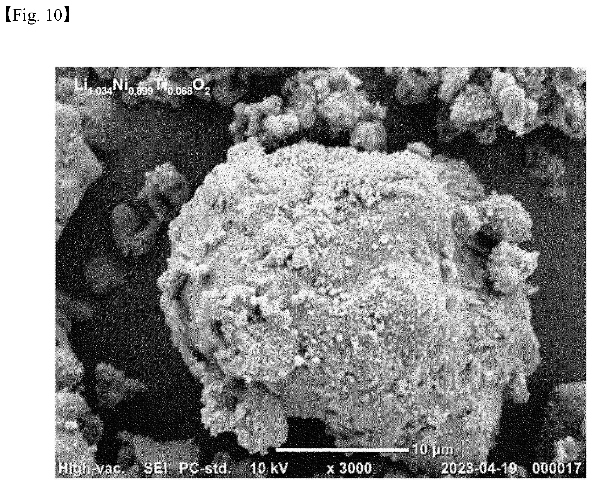

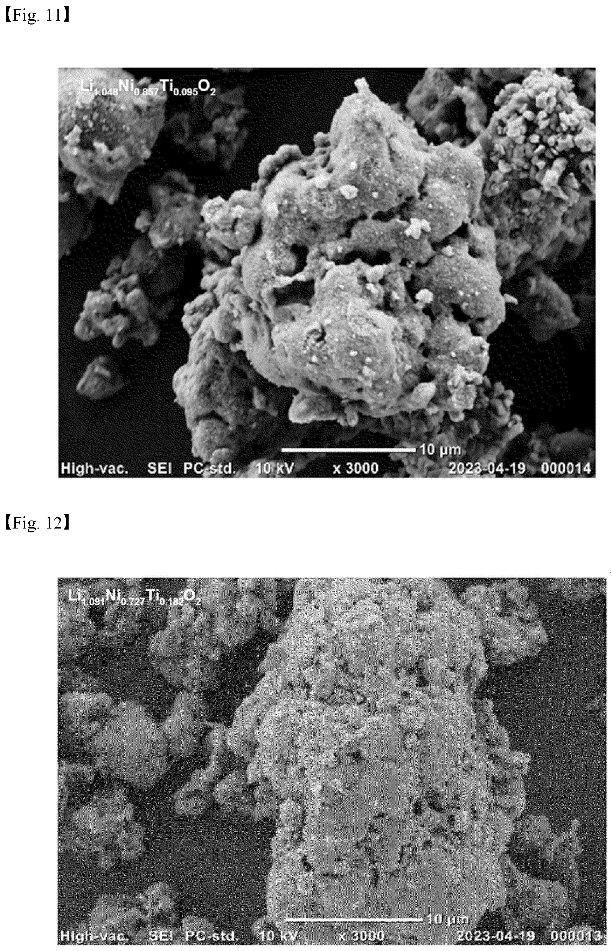

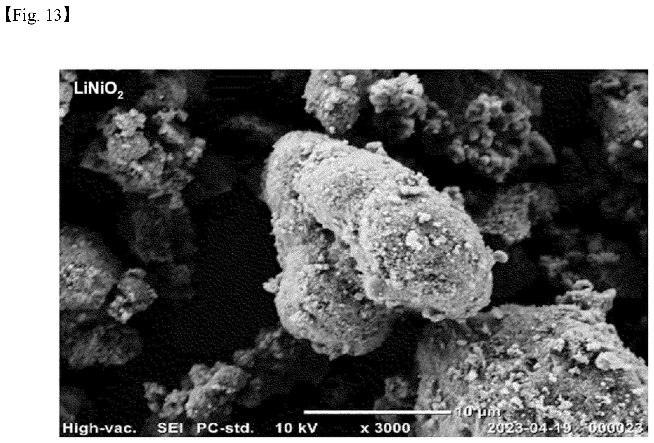

SEM (scanning electron microscope) images of the positive electrode active material precursors and active materials prepared according to Examples 1 to 4, and the positive electrode active materials prepared according to Comparative Examples 2 to 4 and 7, are shown in FIGS. 2 to 13.

Referring to FIGS. 2 to 13, it was confirmed that, in the cases of the Examples to which the spray-drying process was applied, the precursors and active materials had excellent sphericity.

In contrast, it was confirmed that, in the cases of the active materials of Comparative Examples 2 to 4 and 7 to which the spray-drying process was not applied, sphericity was low.

### Experimental Example 2: Evaluation of Physical Properties of Positive Electrode Active Materials

### (1) Evaluation of X-Ray Diffraction Analysis I(003)/I(104) Peak Intensity Ratio

A diffraction pattern obtained after measuring X-ray diffraction using an X-ray diffractometer was used to obtain a diffraction peak intensity ratio of (003) and (104) (I(003)/I(104)).

### (2) Evaluation of c-Axis Lattice Constant Change Profile in First Charging Process

After coin half cells were prepared for each of the Examples and Comparative Examples, the cells were charged until a termination voltage reached 4.6 V, disassembled, and electrodes were collected to evaluate a c-axis lattice constant change profile. A c-axis lattice constant before charging, a maximum c-axis lattice constant during charging, and a c-axis lattice constant after charging (minimum value) were evaluated. Here, the maximum value was selected as 4.4 V, which was set after identifying a voltage showing the maximum value based on in-situ XRD results. In addition, an amount of change in the c-axis lattice constant was evaluated through a difference between the maximum value and the minimum value of the c-axis lattice constant, and a rate of change in the c-axis lattice constant was evaluated through a percentage of the amount of change in the c-axis lattice constant relative to the maximum value of the c-axis lattice constant.

### (3) Evaluation of Sphericity

Sphericity was evaluated by dividing the circumference of a corresponding circle having the same area as a projected particle shape by the actual circumference of the projected particle shape through a flow-type particle analysis apparatus. In this case, measurement was performed using an analyzer for acquiring optical images (Fluid Imaging Technologies, Flowcam 8100) and analysis software (visual spreadsheet).

### (4) Evaluation of Average Particle Diameter of Primary Particles

The sizes of all primary particles constituting one secondary particle were separated by an image segmentation method from an SEM image, and the average particle diameter of the primary particles was measured.

### (5) Evaluation of Average Particle Diameter (D50) of Secondary Particles

The average particle diameter (D50) of the secondary particles was measured using a laser diffraction method.

**[Table 1]**

| | Overall Composition | x | a | b | c | Sphericity | Average Particle Diameter of Primary Particles (nm) | Average Particle Diameter of Secondary Particles (D50, µm) |
|---|---|---|---|---|---|---|---|---|
| Example 1 | Li_{1.024}Ni_{0.927}Ti_{0.049}O₂ | 0.024 | 0.95 | 0.05 | 0 | 0.9 | 150 | 12 |
| Example 2 | Li_{1.034}Ni_{0.899}Ti_{0.068}O₂ | 0.034 | 0.93 | 0.07 | 0 | 0.9 | 140 | 12 |
| Example 3 | Li_{1.048}Ni_{0.857}Ti_{0.095}O₂ | 0.048 | 0.9 | 0.1 | 0 | 0.9 | 120 | 12 |
| Example 4 | Li_{1.091}Ni_{0.727}Ti_{0.182}O₂ | 0.091 | 0.8 | 0.2 | 0 | 0.9 | 100 | 12 |
| Comparative Example 1 | Li_{1.024}Ni_{0.927}Ti_{0.049}O₂ | 0.024 | 0.95 | 0.05 | 0 | 0.4 | 480 | 7 |
| Comparative Example 2 | Li_{1.034}Ni_{0.899}Ti_{0.068}O₂ | 0.034 | 0.93 | 0.07 | 0 | 0.4 | 450 | 7 |
| Comparative Example 3 | Li_{1.048}Ni_{0.857}Ti_{0.095}O₂ | 0.048 | 0.9 | 0.1 | 0 | 0.4 | 400 | 7 |
| Comparative Example 4 | Li_{1.091}Ni_{0.727}Ti_{0.182}O₂ | 0.091 | 0.8 | 0.2 | 0 | 0.4 | 320 | 7 |
| Comparative Example 5 | Li_{1.130}Ni_{0.609}Ti_{0.261}O₂ | 0.130 | 0.7 | 0.3 | 0 | 0.4 | 300 | 7 |
| Comparative Example 6 | Li_{1.167}(Ni_{0.5}Ti_{0.333})O₂ | 0.167 | 0.6 | 0.4 | 0 | 0.4 | 270 | 7 |
| Comparative Example 7 | LiNiO₂ | 0 | 1 | 0 | 0 | 0.4 | 600 | 7 |
| Comparative Example 8 | Li(Ni_{0.6}Co_{0.2-}Mn_{0.2})O₂ | 0 | 0.6 | 0 | 0.4 | 0.9 | 500 | 12 |
| Comparative Example 9 | Li(Ni_{0.8}Co_{0.1}Mn_{0.1})O₂ | 0 | 0.8 | 0 | 0.2 | 0.9 | 550 | 12 |
| Comparative Example 10 | Li(Ni_{0.9}Co_{0.05}Mn_{0.05})O₂ | 0 | 0.9 | 0 | 0.1 | 0.9 | 600 | 12 |
| Comparative Example 11 | Li_{1.13}(Ni_{0.3}O_{0.57})O₂ | 0.13 | 0.34 | 0 | 0 | 0.9 | 200 | 12 |
| Comparative Example 12 | LiNi_{0.94}Ti_{0.06}O₂ | 0 | 0.94 | 0.06 | 0 | 0.9 | 200 | 7 |

In Table 1, x, a, b, and c are values based on the premise that the chemical formula of the lithium transition metal oxide is Li₁₊ₓ(NiₐTi_{b}M2_{c})₁₋ₓO₂ and a+b+c=1. In this case, M2 is a doping element other than Ti, which is the buffer metal element

**[Table 2]**

| | I(003)/I(104) | c-axis Lattice Constant Before Charging (Å) | Maximum c-axis Lattice Constant During Charging (Max) (Å) | c-axis Lattice Constant After Charging (Min) (Å) | Amount of Change in c-axis Lattice Constant During Charging (Max-Min) (Å) | Rate of Change in c-axis Lattice Constant During Charging (%) |
|---|---|---|---|---|---|---|
| Example 1 | 1.53 | 14.24 | 14.40 | 13.93 | 0.47 | 3.26 |
| Example 2 | 1.41 | 14.32 | 14.40 | 14.00 | 0.40 | 2.78 |
| Example 3 | 1.17 | 14.38 | 14.42 | 14.17 | 0.25 | 1.73 |
| Example 4 | 0.8 | 14.44 | 14.49 | 14.30 | 0.19 | 1.31 |
| Comparative Example 1 | 1.54 | 14.27 | 14.41 | 13.91 | 0.5 | 3.47 |
| Comparative Example 2 | 1.41 | 14.33 | 14.39 | 13.99 | 0.4 | 2.78 |
| Comparative Example 3 | 1.19 | 14.39 | 14.44 | 14.14 | 0.3 | 2.08 |
| Comparative Example 4 | 0.83 | 14.44 | 14.48 | 14.32 | 0.16 | 1.10 |
| Comparative Example 5 | 0.59 | 14.53 | 14.56 | 14.38 | 0.16 | 1.24 |
| Comparative Example 6 | 0.37 | 14.62 | 14.63 | 14.45 | 0.18 | 1.23 |
| Comparative Example 7 | 1.64 | 14.21 | 14.39 | 13.35 | 1.04 | 7.23 |
| Comparative Example 8 | 1.7 | 14.26 | 14.47 | 13.63 | 0.84 | 5.81 |
| Comparativ e Example 9 | 1.68 | 14.24 | 14.43 | 13.55 | 0.88 | 6.10 |
| Comparative Example 10 | 1.66 | 14.22 | 14.42 | 13.41 | 1.01 | 7.00 |
| Comparative Example 11 | 1.68 | 14.26 | 14.45 | 14.05 | 0.4 | 2.77 |
| Comparative Example 12 | 1.36 | 14.35 | 14.41 | 14.04 | 0.37 | 2.57 |

Referring to Tables 1 and 2, it was confirmed that, in the cases of the Examples in which excess lithium, nickel, and the buffer metal element (Ti) were introduced and the spray-drying process was applied, sphericity was excellent, and the average particle diameter of the primary particles was appropriately obtained within the range according to the present invention. In addition, it was confirmed that, in the cases of the Examples, I(003)/I(104) values were smaller than those of positive electrode materials having typical compositions. Through this, it was confirmed that the lithium transition metal oxide according to the present invention had a disordered mixed structure in which nickel and a large amount of the buffer metal element were mixed in lithium sites in the lithium layer. In addition, it was confirmed that the amount and rate of change in the c-axis lattice constant were small, and that the c-axis lattice constant value after charging was obtained to be large as contraction during charging was minimized.

In contrast, in the cases of Comparative Examples 1 to 6 in which excess lithium, nickel, and the buffer metal element (Ti) were introduced but the spray-drying process was not applied, the c-axis lattice constant change trend was similar to that of the Examples, but it was confirmed that sphericity was significantly low and the average particle diameter of the primary particles deviated from the range according to the present invention.

In addition, in the cases of Comparative Example 7, Comparative Examples 8 to 10 having typical compositions, or Comparative Example 11 having a lithium-rich composition into which no buffer metal element was introduced, it was confirmed that I(003)/I(104) values were obtained to be large. In addition, in the cases of Comparative Example 7 and Comparative Examples 8 to 10 having typical compositions, it was confirmed that the amount and rate of change in the c-axis lattice constant were large, and the c-axis lattice constant value after charging was obtained to be small as contraction during charging was large.

### Experimental Example 3: Evaluation of Electrochemical Characteristics of Lithium Secondary Batteries

### (1) Evaluation of 1st and 2nd Cycle Discharge Capacity

After lithium secondary battery half cells were prepared and aged at 25°C for 12 hours, a charge/discharge test was performed at 45°C. For evaluation of initial capacity, 200 mAh/g was set as a reference capacity, charging was performed to 4.6 V at a constant current of 0.1C, and then the mode was switched to constant voltage to continue charging until the termination current reached 0.05C. After charging, a rest time of 10 minutes was provided, and then discharging was performed to 2.5 V at a constant current of 0.1C based on a reference capacity of 200 mAh/g. Thereafter, a 2nd cycle discharge capacity was evaluated.

### (2) Evaluation of Rollable Electrode Density

Rollable electrode density was evaluated while checking damage to the electrode uncoated portion by adjusting a gap of a rolling mill.

### (3) Evaluation of Average Voltage

The area under the discharge profile was integrated and then divided by discharge capacity to evaluate average voltage.

### (4) Evaluation of Lifespan Characteristics (45°C, 50 cycles)

After lithium secondary battery half cells were prepared, charging was performed at 45°C to 4.6 V at a constant current of 0.5C, and then the mode was switched to constant voltage to continue charging until the termination current reached 0.05C. After charging, a rest time of 10 minutes was provided, and then discharging was performed to 2.5 V at a constant current of 0.5C. Charge and discharge were performed 50 times under these charge/discharge cycle conditions, and in this case, capacity retention of the 50th cycle relative to the first cycle was calculated.

### (5) Evaluation of Battery Energy Density

A secondary battery was designed through a pouch-type battery design, and energy density was evaluated by converting average voltage, capacity, and volume of the battery by reflecting the density of an electrode in which each material was used. Here, the density of the electrode was converted using the weight of the electrode per unit area and the thickness appearing during maximum rolling.

**[Table 3]**

| | Half Cell | | | | | Full Cell |
|---|---|---|---|---|---|---|
| | 1st cycle Discharge Capacity (mAh/g) | 2nd cycle Discharge Capacity (mAh/g) | Rollable Electrode Density (g/cc) | Average Voltage (V) | Lifespan (%, 50 cycles) | Energy Density (Wh/L) |
| Example 1 | 242.4 | 241.3 | 3.6 | 3.7 | 96.7 | 791.2 |
| Example 2 | 244 | 243.6 | 3.6 | 3.71 | 97.4 | 798.3 |
| Example 3 | 245.7 | 245.5 | 3.6 | 3.7 | 98.5 | 801.2 |
| Example 4 | 251.2 | 248.7 | 3.6 | 3.69 | 94.7 | 802.6 |
| Comparative Example 1 | 239.7 | 237.7 | 3.4 | 3.7 | 94.4 | 783.4 |
| Comparative Example 2 | 242 | 240.9 | 3.4 | 3.71 | 96.9 | 790.5 |
| Comparative Example 3 | 244.1 | 243.7 | 3.4 | 3.7 | 97.8 | 799.1 |
| Comparative Example 4 | 246.3 | 243.3 | 3.4 | 3.69 | 93.6 | 797.2 |
| Comparative Example 5 | 249.8 | 232.5 | 3.4 | 3.7 | 88.1 | 747.5 |
| Comparative Example 6 | 252.5 | 230.1 | 3.4 | 3.68 | 86.3 | 742.1 |
| Comparative Example 7 | 234.3 | 210.6 | 3.4 | 3.64 | 32.7 | 680.7 |
| Comparative Example 8 | 180.6 | 180.5 | 3.4 | 3.69 | 95.7 | 600.2 |
| Comparative Example 9 | 206.6 | 206.3 | 3.4 | 3.67 | 86.9 | 706.8 |
| Comparative Example 10 | 227.7 | 225.8 | 3.4 | 3.65 | 73.2 | 733.5 |
| Comparative Example 11 | 269.7 | 208.6 | 2.9 | 3.61 | 92.8 | 566 |
| Comparative Example 12 | 215.3 | 192.5 | 3.4 | 3.52 | drop | 612.6 |

Referring to Table 3, it was confirmed that, in the cases of the Examples in which excess lithium, nickel, and the buffer metal element (Ti) were introduced and the spray-drying process was applied, capacity, rollable electrode density, average voltage, lifespan characteristics, and energy density were generally very excellent.

In contrast, in the case of Comparative Example 7 having a LiNiO₂ composition, it was confirmed that lifespan characteristics and energy density were significantly deteriorated.

In addition, in the cases of Comparative Examples 8 to 10 having typical nickel-cobalt-manganese compositions, it was confirmed that capacity, lifespan, and energy density were deteriorated.

In addition, in the case of Comparative Example 11 having a lithium-rich composition but into which no buffer metal was introduced, it was confirmed that the 2nd discharge capacity, rollable electrode density, and energy density were significantly deteriorated, and average voltage and lifespan characteristics were deteriorated.

In addition, comparing Comparative Examples 1 to 4 with Comparative Examples 5 to 6, it was confirmed that electrochemical characteristics were more preferably realized when the amount of excess lithium and the amount of the buffer metal element introduced were more appropriately controlled.

In addition, comparing Example 1 with Comparative Example 1, Example 2 with Comparative Example 2, Example 3 with Comparative Example 3, and Example 4 with Comparative Example 4, respectively, it was confirmed that, when the amount of excess lithium and the amount of the buffer metal element introduced were the same, capacity, lifespan, and energy density were further maximized in the Examples in which sphericity and the like were improved by applying the spray-drying process.

In addition, in the case of Comparative Example 12, in which the contents of nickel and titanium relative to the entire transition metals were similar to the ranges according to the present invention, but which could not be regarded as a lithium-rich composition, it was confirmed that capacity characteristics, average voltage, lifespan characteristics, and energy density were all significantly deteriorated compared to the Examples.

Although preferred embodiments of the present invention have been described above, the present invention is not limited thereto, and various modifications may be made and practiced within the scope of the claims, the detailed description of the invention, and the accompanying drawings, and it is natural that such modifications also fall within the scope of the present invention.

Accordingly, the substantial scope of rights of the present invention shall be defined by the appended claims and equivalents thereof.

## Claims

1. A positive electrode active material for a lithium secondary battery, which is a lithium transition metal oxide containing excess lithium, excess nickel, and a buffer metal element,
wherein the lithium transition metal oxide has a molar ratio of lithium to the lithium transition metal oxide of 1.02 to 1.1 and a molar ratio of nickel to transition metal of 0.75 or more,
wherein the lithium transition metal oxide has, as a basic framework, a structure in which a lithium layer and a transition metal layer are alternately stacked, and anisotropic contraction and expansion during charging and discharging are suppressed as a part of the buffer metal element in the transition metal layer is substituted into the lithium layer and a part of lithium ions in the lithium layer is substituted into the transition metal layer, and
wherein the lithium transition metal oxide has a sphericity of 0.8 or more.

2. The positive electrode active material for a lithium secondary battery of claim 1,
wherein the lithium transition metal oxide is a secondary particle formed by aggregation of a plurality of primary particles, and an average particle diameter of the primary particles is 0.25 µm or less.

3. The positive electrode active material for a lithium secondary battery of claim 2,
wherein an average particle diameter (D50) of the secondary particles is 12 µm or less.

4. The positive electrode active material for a lithium secondary battery of claim 1,
wherein a part of nickel ions in the transition metal layer is substituted into the lithium layer.

5. The positive electrode active material for a lithium secondary battery of claim 1,
wherein the lithium transition metal oxide is configured such that lithium ions move through the lithium layer and the transition metal layer during charging and discharging.

6. The positive electrode active material for a lithium secondary battery of claim 1,
wherein the buffer metal element is a transition metal element having no valence electrons in a d orbital.

7. The positive electrode active material for a lithium secondary battery of claim 1,
wherein the buffer metal element is Ti, Nb, W, Zr, V, Cr, Mo, Ta, or a combination thereof.

8. The positive electrode active material for a lithium secondary battery of claim 1,
wherein a content of the buffer metal element is 2 mol% to 25 mol% based on the total number of moles of transition metals.

9. The positive electrode active material for a lithium secondary battery of claim 1,
wherein a content of the buffer metal element is 6 mol% to 15 mol% based on the total number of moles of transition metals.

10. The positive electrode active material for a lithium secondary battery of claim 1,
wherein the lithium transition metal oxide has a ratio of a peak intensity of a (003) plane to a peak intensity of a (104) plane (I(003)/I(104)) of 0.7 to 1.6 in X-ray diffraction analysis.

11. The positive electrode active material for a lithium secondary battery of claim 1,
wherein the lithium transition metal oxide has a difference between a maximum value and a minimum value of a c-axis lattice constant of 0.6 Å or less during charging until a termination voltage reaches 4.6 V in a first charging process.

12. The positive electrode active material for a lithium secondary battery of claim 1,
wherein the lithium transition metal oxide has a rate of change in a c-axis lattice constant of 5% or less during charging until a termination voltage reaches 4.6 V in a first charging process.

13. The positive electrode active material for a lithium secondary battery of claim 1,
wherein the lithium transition metal oxide has a c-axis lattice constant of 13.8 Å or more after charging until a termination voltage reaches 4.6 V in a first charging process.

14. The positive electrode active material for a lithium secondary battery of claim 1,
wherein the lithium transition metal oxide does not contain cobalt and manganese.

15. The positive electrode active material for a lithium secondary battery of claim 1,
wherein the lithium transition metal oxide is represented by the following Chemical Formula 1:
[Chemical Formula 1] Li₁₊ₓ(NiₐM1_{b}M2_{c})₁₋ₓO₂
wherein, in Chemical Formula 1, 0.02≤x≤0.1, 0.75≤a≤0.98, 0.02≤b≤0.25, 0≤c≤0.1, a+b+c=1, M1 is a buffer metal element and is Ti, Nb, W, Zr, V, Cr, Mo, Ta, or a combination thereof, and M2 is a doping element and is Al, B, Y, Co, Mn, Fe, Cu, Zn, Ga, Ge, Ru, Rh, Sn, Sb, Re, Ir, Pt, Pb, Bi, Na, K, Rb, Cs, Ca, Sr, Ba, Mg, Si, Sc, or a combination thereof.

16. A method for preparing a positive electrode active material for a lithium secondary battery, comprising:
mixing a nickel-containing transition metal compound, a buffer metal raw material, and a solvent to form a mixture;
spray-drying the mixture to form a precursor; and
mixing the precursor and a lithium raw material and then calcining the same to form a lithium transition metal oxide,
wherein, in the forming of the mixture, an input amount of the nickel-containing transition metal compound is 75 mol% or more based on the total number of moles of the nickel-containing transition metal compound and the buffer metal raw material, and, in the forming of the lithium transition metal oxide, an input amount of the lithium raw material is controlled such that a molar ratio of lithium to the total amount of transition metals contained in the precursor (Li/Me) is 1.05 to 1.25.

17. The method for preparing a positive electrode active material for a lithium secondary battery of claim 16,
wherein the buffer metal raw material is an oxide, hydroxide, carbonate, sulfate, phosphate, a combination thereof, or a combination thereof, containing a buffer metal element.

18. The method for preparing a positive electrode active material for a lithium secondary battery of claim 16,
wherein the spray-drying is spraying and drying through a spray dryer.

19. The method for preparing a positive electrode active material for a lithium secondary battery of claim 16,
wherein the precursor is represented by any one of the following Chemical Formulas 2 to 5 and has a sphericity of 0.8 or more:
[Chemical Formula 2] (NiₐM1_{b}M2_{c})(OH)₂
wherein, in Chemical Formula 2, 0.75≤a≤0.98, 0.02≤b≤0.25, 0≤c≤0.1, a+b+c=1, M1 is a buffer metal element and is Ti, Nb, W, Zr, V, Cr, Mo, Ta, or a combination thereof, and M2 is a doping element and is Al, B, Y, Co, Mn, Fe, Cu, Zn, Ga, Ge, Ru, Rh, Sn, Sb, Re, Ir, Pt, Pb, Bi, Na, K, Rb, Cs, Ca, Sr, Ba, Mg, Si, Sc, or a combination thereof;
[Chemical Formula 3] (NiₐM1_{b}M2_{c})CO₃
wherein, in Chemical Formula 3, 0.75≤a≤0.98, 0.02≤b≤0.25, 0≤c≤0.1, a+b+c=1, M1 is a buffer metal element and is Ti, Nb, W, Zr, V, Cr, Mo, Ta, or a combination thereof, and M2 is a doping element and is Al, B, Y, Co, Mn, Fe, Cu, Zn, Ga, Ge, Ru, Rh, Sn, Sb, Re, Ir, Pt, Pb, Bi, Na, K, Rb, Cs, Ca, Sr, Ba, Mg, Si, Sc, or a combination thereof;
[Chemical Formula 4] (NiₐM2_{C})(OH)₂·M1_{b}O_{d}
wherein, in Chemical Formula 4, 0.75≤a≤0.98, 0.02≤b≤0.25, 0≤c≤0.1, 2≤d≤3, a+b+c=1, M1 is a buffer metal element and is Ti, Nb, W, Zr, V, Cr, Mo, Ta, or a combination thereof, and M2 is a doping element and is Al, B, Y, Co, Mn, Fe, Cu, Zn, Ga, Ge, Ru, Rh, Sn, Sb, Re, Ir, Pt, Pb, Bi, Na, K, Rb, Cs, Ca, Sr, Ba, Mg, Si, Sc, or a combination thereof; and
[Chemical Formula 5] (NiₐM2_{c})CO₃·M1_{b}O_{d}
wherein, in Chemical Formula 5, 0.75≤a≤0.98, 0.02≤b≤0.25, 0≤c≤0.1, 2≤d≤3, a+b+c=1, M1 is a buffer metal element and is Ti, Nb, W, Zr, V, Cr, Mo, Ta, or a combination thereof, and M2 is a doping element and is Al, B, Y, Co, Mn, Fe, Cu, Zn, Ga, Ge, Ru, Rh, Sn, Sb, Re, Ir, Pt, Pb, Bi, Na, K, Rb, Cs, Ca, Sr, Ba, Mg, Si, Sc, or a combination thereof.

20. The method for preparing a positive electrode active material for a lithium secondary battery of claim 16,
wherein the precursor is a secondary particle formed by aggregation of a plurality of primary particles, and an average particle diameter (D50) of the secondary particles is 3 µm to 12 µm.

21. The method for preparing a positive electrode active material for a lithium secondary battery of claim 16,
wherein the precursor has a SPAN value of 0.3 to 0.7.

22. A precursor for a positive electrode active material for a lithium secondary battery, represented by any one of the following Chemical Formulas 2 to 5 and having a sphericity of 0.8 or more:
[Chemical Formula 2] (NiₐM1_{b}M2_{c})(OH)₂
wherein, in Chemical Formula 2, 0.75≤a≤0.98, 0.02≤b≤0.25, 0≤c≤0.1, a+b+c=1, M1 is a buffer metal element and is Ti, Nb, W, Zr, V, Cr, Mo, Ta, or a combination thereof, and M2 is a doping element and is Al, B, Y, Co, Mn, Fe, Cu, Zn, Ga, Ge, Ru, Rh, Sn, Sb, Re, Ir, Pt, Pb, Bi, Na, K, Rb, Cs, Ca, Sr, Ba, Mg, Si, Sc, or a combination thereof;
[Chemical Formula 3] (NiₐM1_{b}M2_{c})CO₃
wherein, in Chemical Formula 3, 0.75≤a≤0.98, 0.02≤b≤0.25, 0≤c≤0.1, a+b+c=1, M1 is a buffer metal element and is Ti, Nb, W, Zr, V, Cr, Mo, Ta, or a combination thereof, and M2 is a doping element and is Al, B, Y, Co, Mn, Fe, Cu, Zn, Ga, Ge, Ru, Rh, Sn, Sb, Re, Ir, Pt, Pb, Bi, Na, K, Rb, Cs, Ca, Sr, Ba, Mg, Si, Sc, or a combination thereof;
[Chemical Formula 4] (NiₐM2_{C})(OH)₂·M1_{b}O_{d}
wherein, in Chemical Formula 4, 0.75≤a≤0.98, 0.02≤b≤0.25, 0≤c≤0.1, 2≤d≤3, a+b+c=1, M1 is a buffer metal element and is Ti, Nb, W, Zr, V, Cr, Mo, Ta, or a combination thereof, and M2 is a doping element and is Al, B, Y, Co, Mn, Fe, Cu, Zn, Ga, Ge, Ru, Rh, Sn, Sb, Re, Ir, Pt, Pb, Bi, Na, K, Rb, Cs, Ca, Sr, Ba, Mg, Si, Sc, or a combination thereof; and
[Chemical Formula 5] (NiₐM2_{c})CO₃·M1_{b}O_{d}
wherein, in Chemical Formula 5, 0.75≤a≤0.98, 0.02≤b≤0.25, 0≤c≤0.1, 2≤d≤3, a+b+c=1, M1 is a buffer metal element and is Ti, Nb, W, Zr, V, Cr, Mo, Ta, or a combination thereof, and M2 is a doping element and is Al, B, Y, Co, Mn, Fe, Cu, Zn, Ga, Ge, Ru, Rh, Sn, Sb, Re, Ir, Pt, Pb, Bi, Na, K, Rb, Cs, Ca, Sr, Ba, Mg, Si, Sc, or a combination thereof.

23. A positive electrode for a lithium secondary battery, comprising the positive electrode active material of any one of claims 1 to 15.

24. A lithium secondary battery comprising the positive electrode for a lithium secondary battery of claim 23.
